# EUROPEAN PATENT SPECIFICATION

(11) **EP 3 189 584 B1**
(45) Date of publication and mention of the grant of the patent: **06.11.2019**
(21) Application number: 15781449.2
(22) Date of filing: 02.09.2015
(51) Int. Cl.: H02K 21/24

(54) **SYNCHRONOUS ROTATION MOTOR OR GENERATOR PROVIDED WITH DIVERSE ROTORS AND/OR STATORS**
SYNCHRONDREHUNGSMOTOR ODER -GENERATOR MIT VERSCHIEDENEN ROTOREN UND/ODER STATOREN
GÉNÉRATEUR OU MOTEUR SYNCHRONE POURVU DE DIVERS ROTORS ET/OU STATORS

(30) Priority: 02.09.2014 NL 2013403
(43) Date of publication of application: 12.07.2017
(73) Proprietor: Cicilia, Beremundo Elsio, Kralendijk (BQ)
(72) Inventor: Cicilia, Beremundo Elsio, Kralendijk (BQ)
(74) Representative: Land, Addick Adrianus Gosling
(86) International application number: PCT/NL2015/050608
(87) International publication number: WO 2016/036245

(56) References cited:
- EP-A1- 2 234 250
- EP-A2- 1 863 154
- WO-A1-2007/140624
- WO-A1-2008/055410
- WO-A1-2010/019951
- WO-A1-2014/036883
- DE-A1-102011 080 671
- DE-A1-102014 002 100
- FR-A1- 2 957 208
- US-A- 5 945 766
- US-A1- 2007 018 520
- US-A1- 2008 030 085
- US-A1- 2010 219 707
- US-A1- 2010 283 348
- US-A1- 2013 154 423
- US-B2- 7 772 733
- US-B2- 8 614 532

## Description

The present invention relates to an electric motor or generator which can be applied in a wide variety of applications such as for an electrical generator and can be used to drive vehicles, vessels and aircraft.

US 5 945 766 A discloses a brushless direct-current motor including first and second annular-shaped rotors each having a plurality of north and south-polar magnets which are alternately disposed at a distance. A rotor comprises permanent magnets aligned with magnetic poles along a shaft direction. Electromagnets are fixedly connected to the housing.

WO 2007/140624 A1 discloses a multi-coil generator inducing a driveshaft having connected thereto a rotor with permanent magnets which are aligned radially with their magnetic poles. Pairs of magnets on the rotor may be angularly offset by an offset angle.

FR 2 957 208, US 2010/219707 A1, US 2013/154423 A1, WO 2008/055410 A1 and WO 2014/036883 A1 disclose further examples of prior art devices.

The present invention relates to a device according to claim 1, comprising a housing; a shaft mounted rotatably in or on the housing and having at least one shaft end extending through a side wall of the housing; first discs coupled to the rotatable shaft and comprising radially segmented two or more magnetic segments comprising first magnets; and second discs coupled to the housing comprising radially segmented second magnetic segments extending between the first magnetic segments in radial direction and which are provided with second magnets, wherein the first magnets are permanent magnetic segments the second magnets are electromagnets , wherein a pole direction between a magnetic north pole and a magnetic south pole of each of the first and second magnets are directed along the rotatable shaft, wherein adjacent magnetic segments of each of the first discs have an opposite polarity, wherein the second magnets of each of the second discs are radially offset relative to second magnets of adjacent second discs.

The above stated device can be used both as generator and as motor, depending on the manner of connection. Because the magnets are placed on both sides between other magnets, an extremely strong and compact electric motor (or generator) is provided.

As a result of the present invention a motor will be less likely to malfunction and will start more easily than other motors.

The housing preferably comprises aluminium or other non-ferrous material.

The shaft is preferably of steel.

In a preferred embodiment the permanent magnets are arranged rotatably, wherein the stator is provided with electromagnets.

Because the magnet is placed on both sides between other magnets, both poles of the magnets are utilized and an extremely strong electric motor (or generator) is hereby provided.

It will be apparent that, depending on the application, different voltages, amperages or frequencies can be applied with the motor (or generator) according to the present invention.

In the preferred embodiment the magnetic segments of the magnetic discs are offset in each case relative to each other and arranged on the shaft so that a start capacitor can be dispensed with (or can have an extremely small capacitance).

Although the first preferred embodiment of the present invention relates to a motor, various aspects can likewise be applied as a generator.

Further advantages, features and details of the present invention will be elucidated on the basis of the following description of a preferred embodiment thereof, wherein reference is made to the accompanying drawings, in which:
Figure 1 is a perspective view of a preferred embodiment of the present invention;
Figure 2 is a schematic cross-sectional view of the preferred embodiment shown in figure 1;
Figure 3 is an exploded view of the preferred embodiment shown in figures 1 and 2;
Figure 4 is a perspective view of detail IV of figure 3;
Figure 5 is a side view of a cross-section of the device shown in figure 4;
Figure 6 is a perspective view of detail VI of figure 3;
Figure 7 is a cross-sectional view of the component shown in figure 6; and
Figure 8 is a side view of a cross-section along line VIII in figure 2 of the preferred embodiment shown in figures 1, 2 and 3.

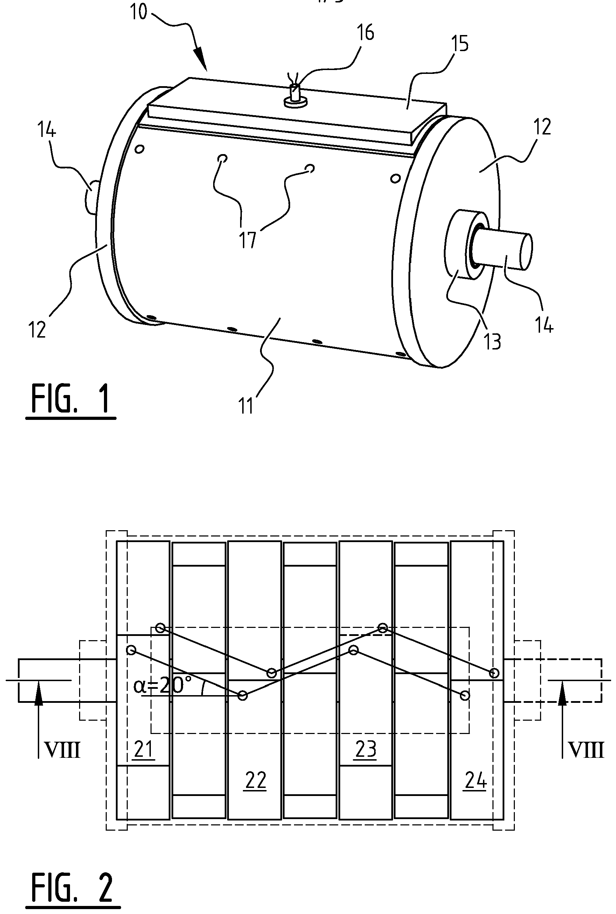

Motor/generator 10 (fig. 1) comprises a substantially cylindrical housing 11 with disc-like end covers 12 which are arranged thereon and each provided with a bearing 13 for a shaft 14. Cylindrical housing 11 is also provided with a removable upper cover 15 for electrical connection, maintenance and the like into which an opening is recessed for an electrical cable 16 for the purpose of connection thereof.

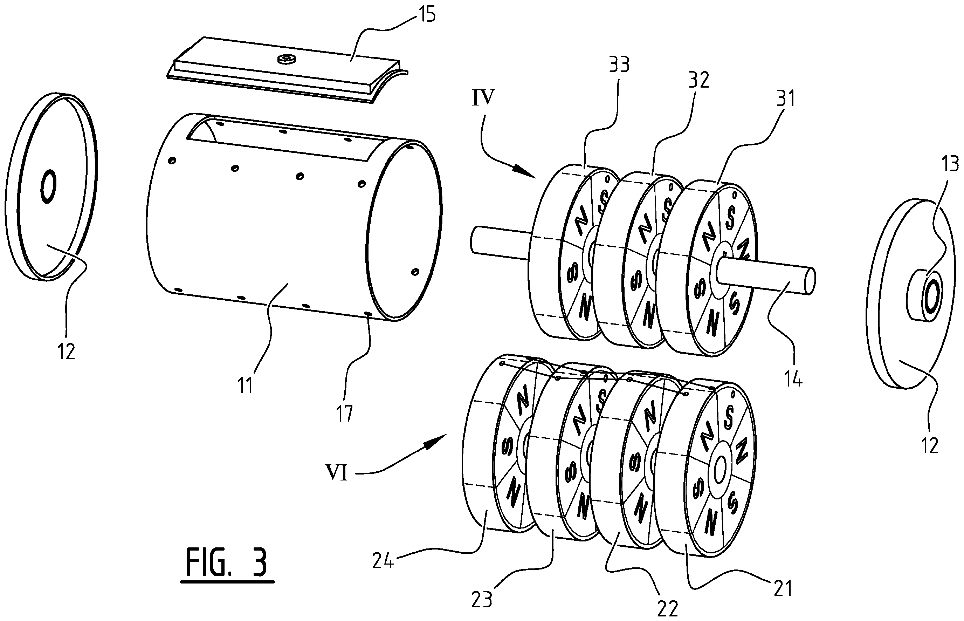

Holes 17 are arranged in cylindrical housing 11. Electromagnetic discs 21, 22, 23, 24 are screwed fixedly via holes 17 (fig. 2, 3). Three permanent magnetic discs 31, 32, 33 are arranged on shaft 14 between these four discs 21, 22, 23, 24 and are therefore rotatable relative to the electromagnetic discs 21, 22, 23, 24 arranged fixedly on the housing.

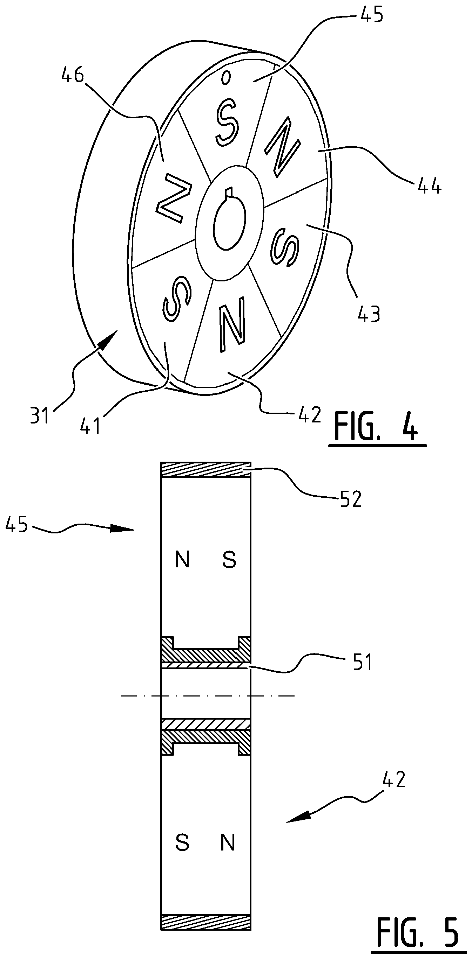

A permanent magnetic disc 31 preferably comprises six magnetic segments 41, 42, 43, 44, 45, 46 (fig. 4, 5) which are arranged in each case between a sliding sleeve 51 and an outer ring 52. A magnetic segment 45 comprises on the left-hand side (fig. 5) a magnetic north pole (N) and on the right-hand side a magnetic south pole (S), while this is reversed in opposite magnetic segments 42.

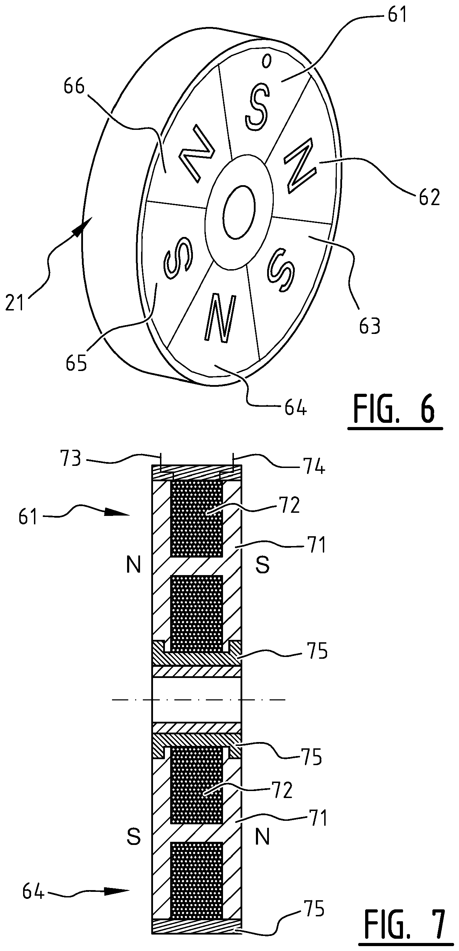

An electromagnetic disc 21 (fig. 6) comprises six electromagnetic segments 61, 62, 63, 64, 65, 66 which are arranged on the rotatable shaft and comprises electric wiring 72 wound therearound in each case with a yoke 71, and two schematically designated terminal contact points 73, 74. Also shown are end yokes 75.

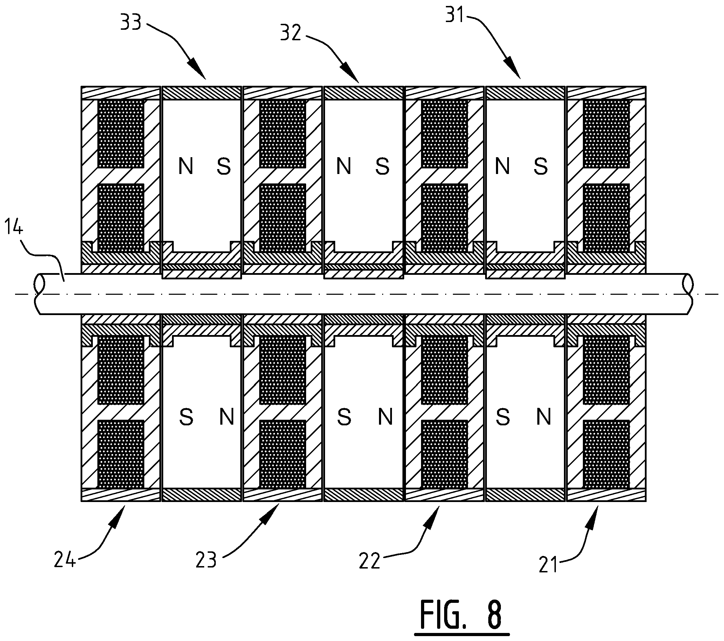

During assembly of the device according to the present invention the segments 21, 22, 23, 24 with the electromagnets are screwed fixedly to the housing and the permanent magnetic discs 31, 32, 33 are placed therebetween, wherein an assembly is formed of stator discs 21, 22, 23, 24 and rotor discs 31, 32, 33 alternately placed adjacency of each other. Figure 8 shows a section of such an assembly. Shaft 14 is then placed therethrough and fixed to the permanent magnetic discs, after which the cover discs 12 are pushed on both sides over shaft ends 14.

As shown particularly in fig. 1 (and 3), the fixed magnets are preferably arranged offset relative to each other on the housing, for instance with an angle α of about 20° in each case.

The present invention is not limited to the above described preferred embodiments; the rights sought are defined by the following claims, within the scope of which many modifications can be envisaged.

In the above description and following claims a magnet is understood to mean a stand-alone piece of ferrous material with a magnetic charge, an electromagnet is understood to mean a stand-alone winding, optionally provided with a core which becomes magnetic when connected to an electrical source; a magnetic disc is understood to mean a disc with magnets or electromagnets, a rotor is understood to mean a shaft to which two or more magnetic discs are fixed, a stator is understood to mean one or more magnetic discs disposed fixedly via the housing or in other manner, and a magnetic segment is understood to mean a (partial) magnetic disc.

## Claims

1. Device (10), comprising:
- a housing (11);
- a shaft (14) mounted rotatably in or on the housing and having at least one shaft end extending through a side wall of the housing;
- first discs (31, 32, 33) coupled to the rotatable shaft (14) and comprising radially segmented two or more magnetic segments (41, 42, 43, 44, 45, 46) comprising first magnets; and
- second discs (21, 22, 23, 24) coupled to the housing (11) comprising radially segmented second magnetic segments (61, 62, 63, 64, 65, 66) extending between the first magnetic segments in radial direction and which are provided with second magnets,
wherein the first magnets are permanent magnetic segments the second magnets are electromagnets , wherein a pole direction between a magnetic north pole (N) and a magnetic south pole (S) of each of the first and second magnets are directed along the rotatable shaft,
wherein adjacent magnetic segments (41, 42, 43, 44, 45, 46) of each of the first discs (31, 32, 33) have an opposite polarity,
wherein the second magnets of each of the second discs (21, 22, 23, 24) are radially offset relative to second magnets of adjacent second discs (21, 22, 23, 24), **characterized in that** the first discs (31, 32, 33) and the second discs (21, 22, 23, 24) are alternately placed adjacent of each other along the shaft (14).

2. Device as claimed in claim 1, wherein the first (31, 32, 33) and second (21, 22, 23, 24) discs each comprise six or more magnetic segments.

3. Device as claimed in claim 1 or 2, wherein the magnetic segments of the two or more first discs (31, 32, 33) arranged on the shaft (14) are offset in each case by 20°.

4. Device as claimed in one or more of the claims 1-3, wherein the electromagnets are connected electrically to each other.

5. Device as claimed in one or more of the claims 1-4, wherein the shaft (14) is connected rotatably and the device (10) is provided with electrical terminals (73, 74) for drawing off an electric current (or voltage).

6. Device as claimed in one or more of the claims 1-5, wherein an electric current/voltage is applied to the electromagnet, whereby the rotatable shaft is driven.

7. Device according to any one of claims 1 to 6, wherein the housing (11) is a cylindrical housing (11) and wherein the housing comprises holes (17), wherein the second discs (21, 22, 23, 24) are fixedly connected to the housing (11) with screws via holes (17).

8. Device according to claim 7, comprising three first discs (31, 32, 33) and four second discs (21, 22, 23, 24) wherein the first discs are arranged between the four second discs (21, 22, 23, 24).

9. Device according to any one of claims 1 to 8, wherein each second disc (21, 22, 23, 24) comprises six second magnetic segments (61, 62, 63, 64, 65, 66), a yoke (71), electric wiring, two terminal contact points (73, 74) and end yokes (75), wherein the electric wiring (72) of each second disc (21, 22, 23, 24) is wound therearound with a respective yoke (71), wherein peripheral ends of the second discs (21, 22, 23, 24) are closed with the end yokes (75).

## Patentansprüche

1. Vorrichtung (10), die Folgendes umfasst:
- ein Gehäuse (11);
- eine Welle (14), die drehbar in oder an dem Gehäuse montiert ist und wenigstens ein Wellenende aufweist, das sich durch eine Seitenwand des Gehäuses erstreckt;
- erste Scheiben (31, 32, 33), die mit der drehbaren Welle (14) gekoppelt sind und zwei oder mehr radial segmentierte magnetische Segmente (41, 42, 43, 44, 45, 46) mit ersten Magneten umfassen; und
- zweite Scheiben (21, 22, 23, 24) die mit dem Gehäuse (11) gekoppelt sind und radial segmentierte zweite magnetische Segmente (61, 62, 63, 64, 65, 66) umfassen, die sich zwischen den ersten magnetischen Segmenten erstrecken und mit zweiten Magneten versehen sind,
wobei es sich bei den ersten magnetischen Segmenten um Dauermagnetsegmente handelt, und bei den zweiten Magneten um Elektromagnete, wobei eine Polrichtung zwischen einem magnetischen Nordpol (N) und einem magnetischen Südpol (S) jedes aus den ersten und zweiten Magneten entlang der drehbaren Welle ausgerichtet ist,
wobei benachbarte magnetische Segmente (41, 42, 43, 44, 45, 46) jeder der ersten Scheiben (31, 32, 33) eine entgegengesetzte Polarität aufweisen,
wobei die zweiten Magnete jeder aus den zweiten Scheiben (21, 22, 23, 24) im Verhältnis zu zweiten Magneten benachbarter zweiter Scheiben (21, 22, 23, 24) radial versetzt sind,
**dadurch gekennzeichnet, dass**
die ersten Scheiben (31, 32, 33) und die zweiten Scheiben (21, 22, 23, 24) abwechselnd benachbart zueinander an der Welle (14) entlang angeordnet sind.

2. Vorrichtung nach Anspruch 1, wobei die ersten (31, 32, 33) und die zweiten (21, 22, 23, 24) Scheiben jeweils sechs oder mehr magnetische Segmente umfassen.

3. Vorrichtung nach Anspruch 1 oder 2, wobei die an der Welle (14) angeordneten magnetischen Segmente der zwei oder mehr ersten Scheiben (31, 32, 33) jeweils um 20° versetzt sind.

4. Vorrichtung nach einem oder mehreren der Ansprüche 1 bis 3, wobei die Elektromagnete elektrisch miteinander verbunden sind.

5. Vorrichtung nach einem oder mehreren der Ansprüche 1 bis 4, wobei die Welle (14) drehbar verbunden ist und die Vorrichtung (10) mit elektrischen Anschlüssen (73, 74) zum Abziehen eines elektrischen Stroms (oder einer Stromspannung) versehen ist.

6. Vorrichtung nach einem oder mehreren der Ansprüche 1 bis 5, wobei ein elektrischer Strom / eine Stromspannung an den Elektromagnet angelegt wird, wodurch die drehbare Welle angetrieben wird.

7. Vorrichtung nach einem der Ansprüche 1 bis 6, wobei es sich bei dem Gehäuse (11) um ein zylindrisches Gehäuse (11) handelt und wobei das Gehäuse Löcher (17) umfasst, wobei die zweiten Scheiben (21, 22, 23, 24) mit Schrauben durch die Löcher (17) fest mit dem Gehäuse (11) verbunden sind.

8. Vorrichtung nach Anspruch 7, die drei erste Scheiben (31, 32, 33) und vier zweite Scheiben (21, 22, 23, 24) umfasst, wobei die ersten Scheiben zwischen den vier zweiten Scheiben (21, 22, 23, 24) ausgerichtet sind.

9. Vorrichtung nach einem der Ansprüche 1 bis 8, wobei jede der zweiten Scheiben (21, 22, 23, 24) sechs zweite magnetische Segmente (61, 62, 63, 64, 65, 66), ein Joch (71), eine elektrische Verdrahtung, zwei Anschlusskontaktpunkte (73, 74) und Endjoche (75) aufweist, wobei die elektrische Verdrahtung (72) jeder der zweiten Scheiben (21, 22, 23, 24) mit einem jeweiligen Joch (71) um dieselbe herumgewickelt ist, wobei die Umfangsenden der zweiten Scheiben (21, 22, 23, 24) mit den Endjochen (75) geschlossen werden.

## Revendications

1. Dispositif (10), comprenant:
- un carter (11),
- une broche (14) montée rotative dans ou sur le carter et présentant au moins une extrémité de broche traversant une paroi latérale du carter,
- des premiers disques (31, 32, 33) couplés à la broche rotative (14) et comprenant au moins deux segments magnétiques (41, 42, 43, 44, 45, 46) segmentés radialement comprenant des premiers aimants, et
- des deuxièmes disques (21, 22, 23, 24) couplés au carter (11) et comprenant des deuxièmes segments magnétiques (61, 62, 63, 64, 65, 66) segmentés radialement s'étendant entre les premiers segments magnétiques dans le sens radial et pourvus de seconds aimants;
lesdits premiers aimants étant des segments magnétiques permanents, les deuxièmes aimants étant des électroaimants, la direction polaire entre un pôle nord magnétique (N) et un pôle sud magnétique (S) de chacun des premiers et deuxièmes aimants étant dirigée le long de la broche rotative,
des segments magnétiques (41, 42, 43, 44, 45, 46) adjacents de chacun des premiers disques (31, 32, 33) ayant une polarité opposée,
les deuxièmes aimants de chacun des deuxièmes disques (21, 22, 23, 24) étant décalés radialement par rapport aux deuxièmes aimants des deuxièmes disques (21, 22, 23, 24) adjacents,
**caractérisé en ce que**
les premiers disques (31, 32, 33) et les deuxièmes disques (21, 22, 23, 24) sont placés de façon alternative adjacents les uns aux autres le long de la broche (14).

2. Dispositif selon la revendication 1, dans lequel les premiers (31, 32, 33) et les deuxièmes (21, 22, 23, 24) disques comprennent chacun au moins six segments magnétiques.

3. Dispositif selon la revendication 1 ou 2, dans lequel les segments magnétiques des au moins deux premiers disques (31, 32, 33) agencés sur la broche (14) sont décalés dans chaque cas de 20°.

4. Dispositif selon une ou plusieurs des revendications 1 à 3, dans lequel les électroaimants sont reliés électriquement entre eux.

5. Dispositif selon une ou plusieurs des revendications 1 à 4, dans lequel la broche (14) est montée rotative et le dispositif (10) est pourvu de bornes électriques (73, 74) pour prélever une intensité (ou tension) électrique.

6. Dispositif selon une ou plusieurs des revendications 1 à 5, dans lequel une intensité (ou tension) électrique est appliquée à l'électroaimant, permettant l'entraînement de la broche rotative.

7. Dispositif selon l'une quelconque des revendications 1 à 6, dans lequel le carter (11) est un carter cylindrique (11) et comprend des perçages (17), les deuxièmes disques (21, 22, 23, 24) étant montés fixes sur le carter (11) au moyen de vis introduites dans des perçages (17).

8. Dispositif selon la revendication 7, comprenant trois premiers disques (31, 32, 33) et quatre deuxièmes disques (21, 22, 23, 24), les premiers disques étant agencés entre les quatre deuxièmes disques (21, 22, 23, 24).

9. Dispositif selon l'une quelconque des revendications 1 à 8, dans lequel chacun des deuxièmes disques (21, 22, 23, 24) comprend six deuxièmes segments magnétiques (61, 62, 63, 64, 65, 66), un étrier (71), un câblage électrique, deux points de contact de bornes (73, 74) et des étriers terminaux (75) ; ledit câblage électrique (72) de chacun des deuxièmes disques (21, 22, 23, 24) étant enroulé autour d'eux avec un étrier (71) respectif, les extrémités périphériques des deuxièmes disques (21, 22, 23, 24) étant fermées par les étriers terminaux (75).
